# EUROPEAN PATENT SPECIFICATION

(11) **EP 3 303 445 B1**
(45) Date of publication and mention of the grant of the patent: **16.12.2020**
(21) Application number: 16753479.1
(22) Date of filing: 06.06.2016
(51) Int. Cl.: C08G 63/08, B29B 9/00, C08J 3/12, C08G 63/80, C08G 63/85, C08G 63/88, B29B 9/06, B29B 9/12

(54) **A ONE STEP PROCESS FOR THE PELLETISATION OF POLY LACTIC ACID WITHOUT MELT PROCESSING**
VERFAHREN IN EINEM SCHRITT ZUR PELLETIERUNG VON POLYMILCHSÄURE OHNE SCHMELZVERFAHREN
PROCÉDÉ EN UNE ÉTAPE POUR LA PELLETISATION DE L'ACIDE POLYLACTIQUE SANS TRAITEMENT PAR FUSION

(30) Priority: 05.06.2015 IN 1668DE2015
(43) Date of publication of application: 11.04.2018
(73) Proprietor: Council of Scientific and Industrial Research, New Delhi 110001 (IN)
(72) Inventor: LELE, Ashish Kishore, Maharashtra Pune 411008 (IN); SHETE, Abhijit Pravin, Maharashtra Pune 411008 (IN); DIKSHIT, Karan Vivek, Maharashtra Pune 411008 (IN)
(74) Representative: Zacco GmbH
(86) International application number: PCT/IN2016/050170
(87) International publication number: WO 2016/194006

(56) References cited:
- EP-A1- 2 554 584
- WO-A2-2009/007989
- JP-A- 2002 047 350
- SHUANG-ZHUANG GUO ET AL: "Properties of Polylactide Inks for Solvent-Cast Printing of Three-Dimensional Freeform Microstructures", LANGMUIR, vol. 30, no. 4, 11 January 2014 (2014-01-11), pages 1142-1150, XP055235596, US ISSN: 0743-7463, DOI: 10.1021/la4036425
- DERAVI LEILA F ET AL: "Progress towards elucidating the structure-function relationships of a natural nanoscale photonic device in cuttlefish chromatophores", PROGRESS IN BIOMEDICAL OPTICS AND IMAGING, SPIE - INTERNATIONAL SOCIETY FOR OPTICAL ENGINEERING, BELLINGHAM, WA, US, vol. 9341, 11 March 2015 (2015-03-11), pages 93410L-93410L, XP060049460, ISSN: 1605-7422, DOI: 10.1117/12.2081387 ISBN: 978-1-5106-0027-0

## Description

### FIELD OF THE INVENTION:

The present invention relates to a one step process for the pelletization of poly lactic acid of (weight average) molecular weight in the range of 600,000-800,000 (6-8 lakhs) without melt processing such that the pellets obtained exhibit minimal (weight average) molecular weight reduction. The (weight average) molecular weight of poly lactic acid (PLA) in the obtained pellets is retained in the range of 600,000-800,000 (6-8 lakhs).

### BACKGROUND AND PRIOR ART:

Poly-l-lactic acid is a biologically compatible and safe polymer. It displays degradation with time and its degradation product, lactic acid, is not hazardous and provides itself as a precursor for pyruvic acid, which is the fundamental molecule for Krebs cycle. Lactic acid is dispelled from the body and is not retained by the body as a toxic byproduct. As poly-l-lactic acid possesses the above said properties, it is useful for medical purposes, including resorb able sutures, reinforcing materials in orthopedic surgery, and drug delivery systems. Despite its use for such high end niche applications poly-l-lactic acid also finds use in commodity applications. The rising awareness about clean resources, which do not burden our reserves of fossil fuels, and depleting sources of oil are leading consumers away from traditionally used polyolefins, and other high volume polymers, to polymers that degrade over time under natural conditions. For commodity applications, high mechanical properties are not required and the desired properties are obtained by low molecular weight poly-l-lactic acid, which degrades faster compared to high molecular weight polymer. For application in orthopedic implants high molecular weight polymer which degrades at a slower rate upon biological exposure is desired. Methods for production of high molecular weight poly-l-lactic acid are known in literature.

Article titled "Recent advancements of biodegradable polylactic acid/ polylactide: A review on synthesis, characterization and applications" by Asutosh Kumar Pandey published in Advanced Materials Letters, 2013, pp 1-56 reports the first step of the coordination-insertion mechanism (i) consists of the coordination of the monomer to the Lewis-acidic metal center. The monomer subsequently inserts into one of the aluminum alkoxide bonds via nucleophilic addition of the alkoxy group on the carbonyl carbon. (ii) followed by ring opening via acyl-oxygen cleavage. (iii) hydrolysis of the active metal-alkoxide bond leads to the formation of a hydroxyl end group. The most widely used complex for the industrial preparation of PLA is undoubtedly tin (II) bis (2-ethylhexanoate).

Article titled "Poly (lactide -co- glycolide) fiber: An overview" by Bahareh Azimi et al. published in Journal of Engineered Fibers and Fabrics, 2014, 9(1), pp 47-66 reports a review of the chemistry and different properties of PLGA and production of PLGA fiber by various methods, along with correlations between structure and properties of the fibers. The applications of these fibers in biological and medical domains are also discussed.

Article titled "Poly-lactic acid: production, applications, nanocomposites, and release studies" by Majid Jamshidian et al. published in Comprehensive Reviews in Food Science and Food Safety, 2010, 9(5) pp 552-571 reports production, applications, nanocomposites, and release studies of poly-lactic acid. PLA has a variable molecular weight and only its high molecular weight polymer is used in the packaging industry. Three ways are possible for the polymerization of lactic acid; (a) direct condensation polymerization; (b) direct polycondensation in an azeotropic solution (an azeotrope is a mixture of 2 or more chemical liquids in such a ratio that its composition cannot be changed by simple distillation. This occurs because, when an azeotrope is boiled, the resulting vapor has the same ratio of constituents as the original mixture); and (c) polymerization through lactide formation.

Article titled "Synthesis of poly(L-lactide) and polyglycolide by ring-opening polymerization" by Sachiko Kaihara et al. published in Nature Protocols, 2007, 2, pp 2767 - 2771 reports the synthesis of poly(L-lactide) by ring-opening polymerization of L-lactide using tin(II) 2-ethylhexanoate catalyst as well as the synthesis of polyglycolide by ring-opening polymerization of glycolide. Ring-opening polymerization of cyclic diesters synthesized from α-hydroxycarboxylic acids gives high-molecular-weight polyester in high yield. Tin(II) 2-ethylhexanoate catalyst is the most common catalyst for ring-opening polymerization of diesters owing to its high reactivity and low toxicity. Purity of monomers and the amount of water and alcohol in the reaction system are significant factors for increasing molecular weight and conversion of polyesters. The molecular weight of the polyesters is also dependent on reaction temperature and reaction time. This protocol can be completed in 3 d for the synthesis of poly(L-lactide) and 2 d for the synthesis of polyglycolide.

European patent 2607399 discloses a process is described for producing a high molar mass polylactic acid, which comprises the following steps: a) polycondensation in a reactor (R1) of a lactic acid solution, by heating in the form of temperature gradients and under controlled pressure, resulting in a polylactic acid oligomer within the range of 300 to 5000 g/mol; b) conversion, in reactor (200), of the polylactic acid of low molar mass obtained in step a) to a lactide, in the presence of a depolymerization catalyst; c) separation of the volatile fractions; d) recrystallization of the lactide in the vessel (R3), in order to obtain ethanol; e) polymerization, in a tube reactor (300), of the recrystallized lactide obtained in step d), via ring opening in the presence of the catalyst, producing a high molar mass polylactic acid; f) devolatilization, at (400), of the polymeric mass obtained in step e); and g) recovery of the final polylactic acid product with a high degree of purity, with a molar mass of between 50 000 and 200 000 g/mol and a reaction conversion of between 70% and 95%. Also described are the depolymerization reactor (200), polymerization reactor (300) and devolatilization reactor (400) used in the process of the invention.

Article titled "Synthesis of high-molecular-weight poly(L-lactic acid) through the direct condensation polymerization of L-lactic acid in bulk state" by Guang-Xin Chenet al. published in European Polymer Journal 2006; 42(2), pp 468-472 reports a strategy was attempted to produce high-molecular-weight poly(l-lactic acid) (PLLA) through the direct condensation polymerization of l-lactic acid in bulk state. Polymerizations were carried out with titanium (IV) butoxide (TNBT) as a catalyst employing different duration of decompression, esterification and polycondensation. The molecular weights were characterized by using the gel permeation chromatography (GPC).

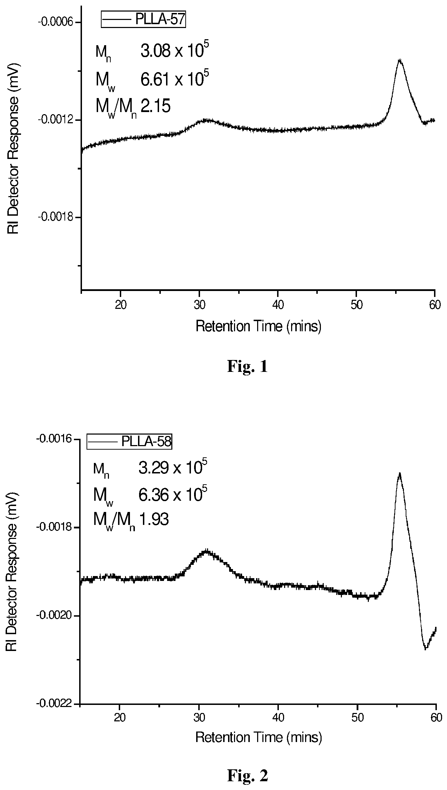

Article titled "Synthesis and characterizations of poly (lactic acid) by ring-opening polymerization for biomedical applications" by Milena S. Lopes et al. published in Chemical Engineering Transactions, 2014, 38, pp 331-336 reports PLA can be obtained using different routes (Figure 1). In general, there are three methods which can be used to produce high molecular mass PLA of about 100 000 Daltons: (a) direct condensation polymerization; (b) azeotropic dehydrative condensation and (c) polymerization through lactide formation, the ring-opening polymerization (Aura et al., 2004). Currently, direct condensation and ring-opening polymerization are the most used production techniques.

Article titled "Preparation of higher molecular weight poly (1-lactic acid) by chain extension" by Chenguang Liu et al. published in International Journal of Polymer Science, 2013, Article ID 315917 reports High molecular weight poly (lactic acid) (PLA) was obtained by chain extending with hexamethylene diisocyanate (HDI). The influences of the amount of chain extender, reaction time, and molecular weight changes of prepolymers on the poly(lactic acid) were investigated. PLA prepolymer with a viscosity, average molecular weight of 2 × 10⁴ g/mol was synthesized from L-lactide using stannous octoate as the catalyst.

Article titled "Ring-opening polymerization of l-lactic acid o-carboxyanhydrides initiated by alkoxy rare earth compounds" by Zhengguo He et al. published in Molecules, 2013, 18, pp 12768-12776 reports the ring-opening polymerization of L-lactic acid O-carboxyanhydrides was initiated by triisopropoxyneodymium in toluene-THF mixtures. Typically, high yields and relatively high molecular weight PLAs were obtained within 4 h at 25 °C. The reaction was highly controllable and easy to conduct, and the molecular weight distribution of the PLAs was rather narrow (Mw/Mn = 1.10-1.36). NMR analysis showed that one end of the PLA chain consisted of an isopropoxy group, while the other end of the chain contained a hydroxyl group. Due to their availability and high polymerizability, Lac-OCAs are promising monomers for the preparation of tailored architectures derived from well-defined PLAs.

Article titled "Reversible kinetics and thermodynamics of the homopolymerization of 1-lactide with 2-Ethylhexanoic Acid Tin(II) Salt" by David R. Witzke et al. published in Macromolecules, 1997, 30 (23), pp 7075-7085 reports The reversible kinetics of l-lactide bulk polymerization with tin(II) ethylhexanoate was determined over a wide range of temperatures, 130-220 °C, and monomer to initiator molar ratios, 1000-80 000. Both polymerization and depolymerization are accurately described by a reversible model with a propagation term that is first order in monomer and catalyst. The activation energy of propagation is 70.9 ± 1.5 kJ mol-1. The enthalpy, entropy, and ceiling temperature of polymerization are -23.3 ± 1.5 kJ mol-1, -22.0 ± 3.2 J mol-1 K-1, and 786 ± 87 °C, respectively. Crystallization increases the propagation rate and decreases the apparent monomer equilibrium in proportion to the degree of crystallinity. Natural hydroxyl impurities stoichiometrically control the polymer molecular weight but do not significantly affect the propagation rate.

Article titled "Synthesis polylactide with varying molecular weights" by Minh Chau Truong published as thesis, 2013 reports polylactide with various molecular weights and molecular weight distributions were synthesized by solution ring opening polymerization. Molecular weight was controlled by varying the ratio of L-lactide monomer to palmityl alcohol initiator and tin(II) octanoate was used as a catalyst for precise control over molecular weight. Anhydrous toluene was used as a non-reactive solvent to prevent the contamination of catalyst. Besides, we also try to obtain the standard molecular weight of PLA (greater than 100,000 g/mol) to compare with commercial PLAs. Properties of different molecular weights of PLA were characterized by gel permeation chromatography, thermogravimetric analysis, differential scanning calorimety, and 1H NMR spectroscopy.

US Pat. No. 5770682 discloses a method of producing poly-l-lactic acid by ring opening polymerization, wherein a compound is added to inhibit the catalytic activity at the end of the reaction. A method for residual lactide removal is also described in the same patent document, where pressure reduction and concurrent passage of an inert gas are used for the removal of unreacted monomer. The molecular weights obtained by this method can give polymer having molecular weights 200,000-500,000.

US Pat. No. 5136017 discloses a method for continuous polymerization of l-, d-, dl-, or mesolactides. The poly-l-lactic acid produced by this method exhibits molecular weight in the range of 50,000 to 300,000.

US Pat Appl. No. 20140121347 discloses discloses a method for catalytic condensation synthesis of poly-l-lactic acid using bionic creatinine-guanidine chloride. Creatinine-guanidine chloride is used as a catalyst to convert industrial grade lactic acid into metal and toxic residue free poly lactic acid featuring high molecular weight and biological safety.

Currently reported techniques of poly lactic acid production employ polycondensation or ring opening polymerization to produce high molecular weight poly lactic acid. These techniques have a limitation of producing polymer having a molecular weight around 300,000-500,000. Also, the said polymerization reactions are carried out at higher temperatures, 140-220°C. Melt processing of poly-l-lactic acid has always come across as an issue of concern. Retention of molecular weight during processing of poly-l-lactic acid has been a problem as residual lactide or moisture leads to transesterification and main chain scission. Earlier reported polymerization techniques suggest carrying out reactions for long durations of time to obtain high molecular weights. This approach is not validated by the industry, as the time scales prove to be a hindrance for large scale production.

Article titled "Thermal decomposition of biodegradable polyesters -II. Poly(lactic acid)" by F.D. Kopinke et al. published in the Journal Polymer Degradation and Stability, 1996, 53(3), pp 329-342 reports thermal behavior of PLA with thermogravimetric analysis and Gas Chromatography/ Mass Spectroscopy techniques. The degradation pathways proposed for PLA are as follows:-
1. Intra- and intermolecular ester exchange (leads to the formation of lactide and cyclic oligomers)
2. Cis-elimination (leads to formation of acrylic acid and acyclic oligomers)
3. Radical and concerted nonradical reactions (leads to formation of aldehydes and carbon monoxide)
4. Radical reactions (leads to formation of aldehydes, ketones and carbon monoxide)
5. Selective, Tin-catalyzed depolymerization (leads to formation of lactide only).

Article titled "Thermal degradation of poly(lactic acid) (PLA) and poly(butylene-adipate-co-terephthalate) (PBAT) and their blends upon melt processing" by Francesca Signori et al. published in the Journal Polymer Degradation and Stability,2009, 94(1):74-82 reports degradation behavior of PLA using Size Exclusion Chromatography Techniques and a significant drop in molecular weight values has been reported. It was also reported that as the temperature increases the drop in molecular weight is seen to be higher.

Article titled "Thermal oxidative degradation of poly-lactic acid" by M.C. Gupta et al published in the journal Colloid and Polymer Science, 1982, 260(3), pp 308-311 reports the isothermal weight loss in PLA by means of thermogravimetric analysis and the molecular weights are characterized using end group analysis. A significant drop in molecular weight is observed upon exposing PLA at elevated temperatures for varying periods of time. It is concluded that increasing temperature as well the amount of time at higher temperature has a detrimental effect on the molecular weight of PLA.

Article titled "Influence of melt processing conditions on poly(lactic acid) degradation: Molar mass distribution and crystallization" by Pierre Erwan Le Marec, et al. published in the journal Polymer Degradation and Stability, 2014, 110, 353-363 reports the effect of temperature and time on the PLA molecular weight. The polymer samples are characterized by Size Exclusion Chromatography coupled with Multi-angle light scattering to get molecular weight data. It is confirmed that significant drop in molecular weight is observed upon heating the sample at higher temperatures and maintaining the sample at higher temperatures for longer periods of time. Shear heating in polymers is a common occurrence. The presence of any shear in the presence of heat would lead to further heating of sample; hence chances of degradation are more.

Article titled "Processing technologies for poly(lactic acid)" by L.T. Tim, et al. published in the journal Progress in Polymer Science, 2008, 33(8), pp 820-852 have presented a review of PLA processing techniques. They have highlighted the fact that PLA degrades upon thermal exposure and have made clear the need to process PLA in the absence of heat.

Article titled "Injection Moulding of Biodegradable Implants" by R. von Oepen, et al. published in the journal Clinical Materials, 1992, 10 (1-2), pp 21-28 have studied the process of conversion of PLA into end-use biodegradable implants. The problem of molecular weight degradation upon heating is highlighted and ways to tackle are suggested none of which are prior art for our invention. The loss in molecular weight is to be avoided as it has a direct effect on the final mechanical properties of the polymer.
PCT application no. WO 2009/007989 A2 of the INDIAN INST TECHNOLOGY, BOMBAY discloses a process to prepare pellets of polylactic acid by first preparing a dry tin octanoate-oligomer-lactide catalyst complex.
Japanese Patent application no. JP 2002 047350 A (TEIJIN CHEMICALS LTD) discloses a process to manufacture polycarbonate resin particles.
Article titled "Properties of Polylactide Inks for Solvent-Cast Printing of Three-Dimensional Freeform Microstructures" by Shuang-Zhuang Guo et al. in LANGMUIR, vol. 30, no. 4, 11 January 2014 (2014-01-11), pages 1142-1150 discloses a process to prepare PLA fibres by solvent-cast printing a solution of semi-crystalline polylactide in dichloromethane. PLA is a polymer that is prone to degradation when melt processed. This is even more so if certain applications (like biomedical applications) require minimization of additives to control degradation. In this context, a process that can produce pellets (typical shape used to feed into processing setups) without involving a melt processing step is very valuable.

Prior art documents showed PLA degrades upon thermal exposure and molecular weight degradation upon heating So there is need to develop a process to convert the polymer to a filamentous or fibrous shape that can be pelletized without going through a melt processing/ shaping step to get the filamentous/ fibrous shape.
The problem of converting PLAs to shapes with minimum degradation and especially without use of additives and loss of molecular weight of polylactic acid are an outstanding problems in the literature. This invention has proposed an unexpected solution to these problem.
Therefore, there is a need to develop a process to convert the polymer to a filamentous or fibrous shape that can be pelletized without going through a melt processing/ shaping step to get the filamentous/ fibrous shape with minimal molecular weight reduction.

### OBJECTIVE OF THE INVENTION:

The main objective of the present invention is to provide a one step process for the palletization of poly lactic acid of (weight average) molecular weight in the range of 600,000-800,000 (6-8 lakhs) without melt processing such that the pellets obtained exhibit minimal molecular weight reduction.

Another objective of the present invention is to provide pellets of poly lactic acid (PLA) with (weight average) molecular weight range of 600,000-800,000 (6-8 lakhs).

Still another objective of the present invention is to provide pellets of poly lactic acid with lactide content of the pellets is in a range from 0-10%.

Yet another objective of the present invention is to provide an efficient process for production of high molecular weight poly-l-lactic acid from l-lactide, which would undergo least degradation upon melt processing.

### SUMMARY OF THE INVENTION:

Accordingly, the present invention provides a one step process for the pelletization of poly lactic acid of (weight average) molecular weight in the range of 600,000-800,000 (6-8 lakhs) without melt processing such that the pellets obtained exhibit minimal molecular weight reduction.

In an embodiment, the present invention provides pellets of poly lactic acid (PLA) with (weight average) molecular weight range of 600,000-800,000 (6-8 lakhs).

In another embodiment, the present invention provides pellets of poly lactic acid with lactide content of the pellets is in a range from 0-10%.

In still another embodiment the present invention provides an efficient process for production of high molecular weight poly-l-lactic acid from l-lactide, which would undergo least degradation upon melt processing.

In yet another [not claimed] embodiment the present invention provides process for production of poly-l-lactic acid pellets having lactide content in the range of 0-10% and molecular weight in the range of 500,000-900,000 (5-9 lakhs).

In still yet another embodiment, the present invention provides poly-l-lactic acid which is useful as a bio-compatible and biodegradable polymer and can be manufactured in various forms such as powder, pellets, and fibers.

### Abbreviation:

GPC: Gel Permeation Chromatography
PLLA: Poly-l-lactic acid
TGA: Thermogravimetric analysis

### BRIEF DESCRIPTION OF THE DRAWINGS:

**Fig 1****:** GPC analysis results of PLLA having Mw of 661000
**Fig 2****:** GPC analysis results of PLLA having Mw of 636000
**Fig 3****:** GPC analysis results of PLLA having Mw of 668000
**Fig 4****:** GPC analysis results of PLLA having Mw of 690000
**Fig 5****:** GPC analysis results of PLLA having Mw of 643000
**Fig 6****:** TGA analysis results exhibiting lactide content of 2.224%
**Fig 7****:** TGA analysis results exhibiting lactide content of 4.023%
**Fig 8****:** TGA analysis results exhibiting lactide content of 5.819%
**Fig 9****:** TGA analysis results exhibiting lactide content of 7.514%
**Fig 10****:** TGA analysis results exhibiting lactide content of 0.807%
**Fig 11****:** Stereo-zoom microscopy image showing the width of a flat pellet made from 10 w/v% PLLA solution
**Fig 12****:** Stereo-zoom microscopy image showing the cross-section of a flat pellet made from 10 w/v% PLLA solution
**Fig13****:** Stereo-zoom microscopy image showing the width of cylindrical pellet made from 20 w/v% PLLA solution
**Fig 14****:** Stereo-zoom microscopy image showing the cross section of cylindrical pellet made from 20 w/v% PLLA solution
**Fig 15****:** Stereo-zoom microscopy image showing the width of hollow, cylindrical pellet made from 30 w/v% PLLA solution
**Fig 16****:** Stereo-zoom microscopy image showing the cross section of hollow, cylindrical pellet made from 30 w/v% PLLA solution
**Fig 17****:** GPC analysis results of PLLA having Mw of 633,000
**Fig 18****:** GPC is for PLLA pellets showing weight average molecular weight of 600,000

### DETAILED DESCRIPTION OF THE INVENTION:

The invention will now be described in detail in connection with certain preferred and optional embodiments, so that various aspects thereof may be more fully understood and appreciated.

The present invention discloses an efficient process for production of high molecular weight poly-l-lactic acid from l-lactide, having high monomer to polymer conversion ratios and low unreacted lactide content. It further shows a process, wherein the obtained polymer can be converted to pellets having an interesting morphology, wherein the pellets are observed to be hollow and non-porous.

In an embodiment, the present invention describes an efficient process for production of high molecular weight poly-l-lactic acid from lactide, wherein said process comprising the following steps:
a. carrying out ring opening polymerization in the presence of a suitable catalyst;
b. subjecting compound of step (a) to solid state polymerization to obtain high molecular weight poly-l-lactic acid with low lactide content.

In preferred embodiment, said ring opening polymerization is carried out at temperature in the range of 140-220°C for a time period in the range of 0-60 hours. Preferably ring opening polymerization is carried out at 140°C for 75 minutes.

In another preferred embodiment, said solid state polymerization is carried out at temperature in the range of 110-140°C for a time period in the range of up to 384 hours to get high (weight average) molecular weight poly-l-lactic acid. Preferably solid state polymerization is carried out at 110°C for 12 hours.

In still another [not-claimed] preferred embodiment, said high molecular weight poly-l-lactic acid is in the [not-claimed] range of 500,000-900,000 (5-9 lakhs). Preferably the (weight average) molecular weight of poly-l-lactic acid obtained by above process is 600,000-800,000 (6-8 lakhs). The lactide content observed in the said polymer is less than 10%. Preferably the lactide content is less than 2%.

In yet another preferred embodiment, the conversion of lactide into poly lactic acid may be carried out using various catalyst systems such as, tin (II) chloride, tin (II) ethyl hexanoate, zinc (II) alkoxides, etc.

In preferred embodiment, the catalyst used is tin (II) ethyl hexanoate.
In still yet another preferred embodiment, depending upon the final molecular weight that is targeted, the monomer to catalyst ratio may vary from 170:1 to 6300:1. More preferably, the monomer to catalyst ratio is 960:1.

The initiator-free catalytic ring opening polymerization is carried out at a temperature which is relatively lower than the conventional techniques. Upon polymerization for a small time period the polymer is subjected to even lower temperatures which lie between the initial polymerization temperature and melting point of the monomer. This ensures that highest conversion in the least possible time frame has taken place.

The obtained polymer is dissolved, filtered, and precipitated. The polymer is now extruded at room temperature in the form of a highly viscous solution. The fibre obtained can be cut into pellets which have to be dried thoroughly before use in any melt processing equipment.

Poly-l-lactic acid produced by this method is useful as a bio-compatible and biodegradable polymer and can be manufactured in various forms such as powder, pellets, and fibers.

PLA is a polymer that is prone to degradation when melt processed. This is even more so if certain applications (like biomedical applications) require minimization of additives to control degradation. In this context, a process that can produce pellets (typical shape used to feed into processing setups) without involving a melt processing step is very valuable. In this invention, the inventors have developed a process to convert the polymer to a filamentous or fibrous shape that can be pelletized without going through a melt processing/ shaping step to get the filamentous/ fibrous shape. This has been accomplished by extruding a solution of the polymer directly in the wet stage into filaments. The problem of converting PLAs to shapes with minimum degradation and especially without use of additives is an outstanding problem in the literature. This invention has proposed an unexpected solution to the problem.

In another embodiment, the present invention provides flat filament-like pellets, or oblong, non-porous pellets, or hollow, non-porous pellets of poly-l-lactic acid.

Still another rembodiment, the present invention provides a one step process for the synthesis of PLA pellets comprising dissolving poly lactic acid of (weight average) molecular weight in the range of 600,000-800,000 (6-8 lakhs) in a solvent followed by extrusion at the temperature ranging from 25°C to 30°C to obtain fibre morphologies, said fibres are cut to obtain pellets, wherein the (weight average) molecular weight of PLA in the pellets is retained in the range of 600,000-800,000 (6-8 lakhs).

The obtained pellets exhibit minimal (weight average) molecular weight in the range of 600,000-800,000 (6-8 lakhs) and lactide content in the range of 0-10%.
In preferred embodiment, said pellets are selected from flat-filaments, oblong non porous or hollow non porous pellets.
In preferred embodiment, said solvent for dissolution is selected from dichloromethane and chloroform. Preferably said solvent is chloroform.

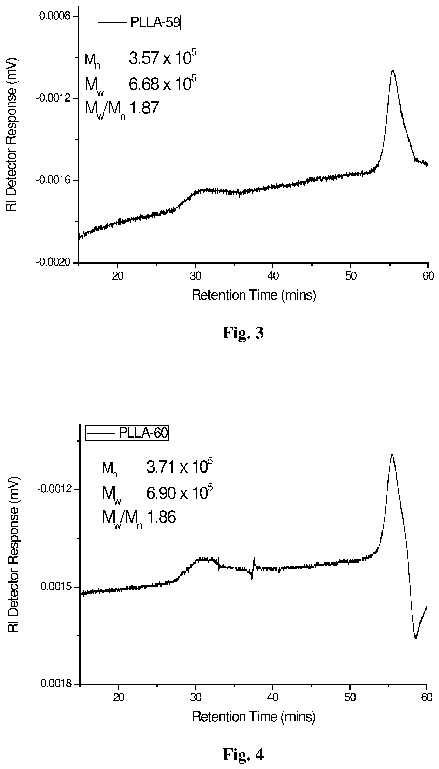

Figures 1-5 depicts Gel Permeation Chromatography (GPC) plots which are used to calculate the (weight average) molecular weight of the synthesized polymer. The plots presented are compared against those of atactic polystyrene and (weight average) molecular weight can be found out. Using GPC the weight average molecular weight is found out.

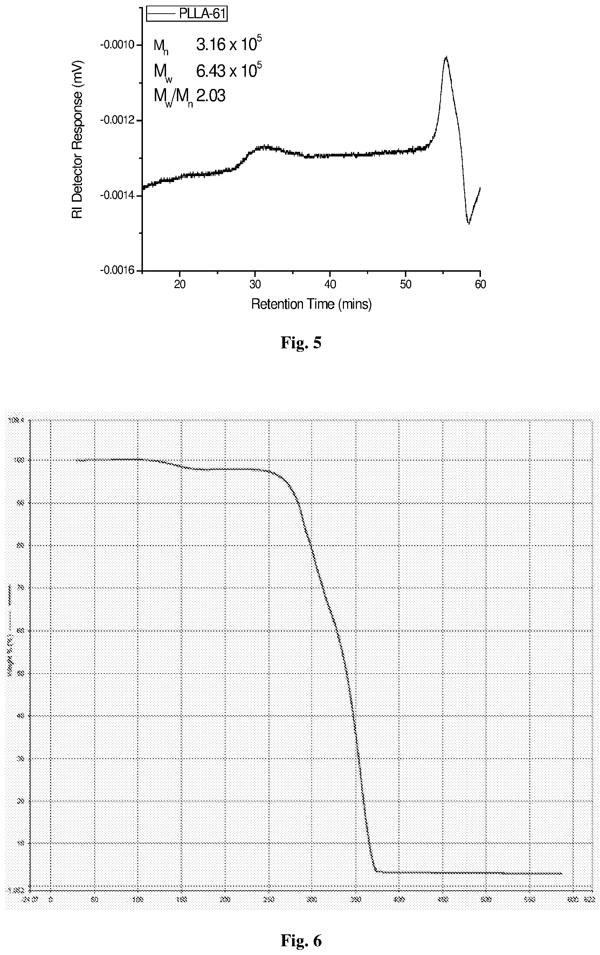

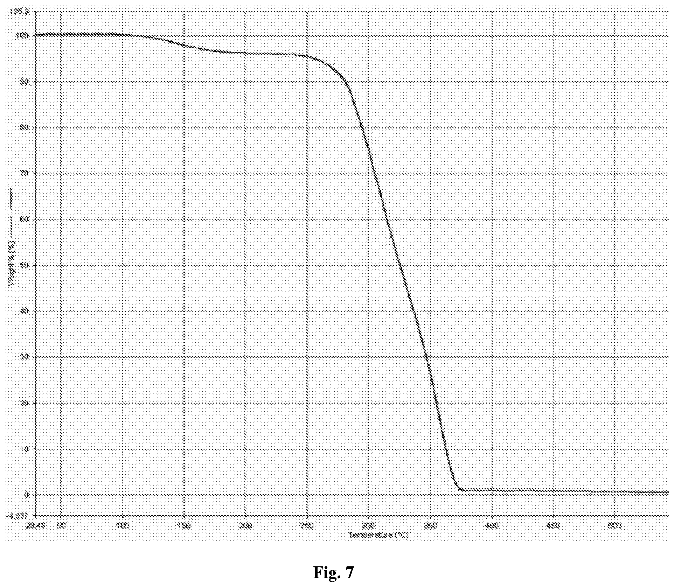

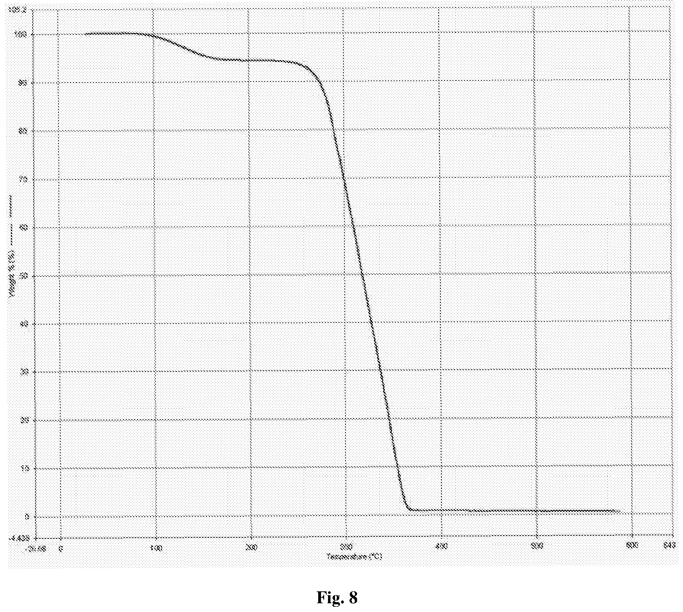

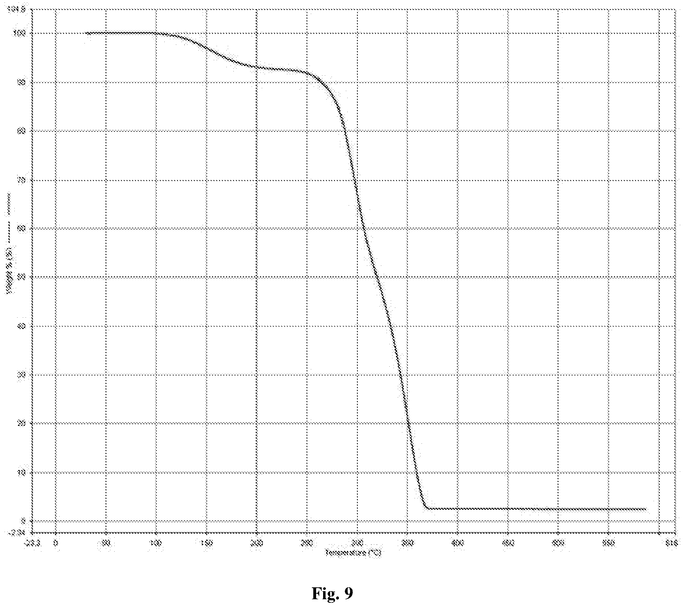

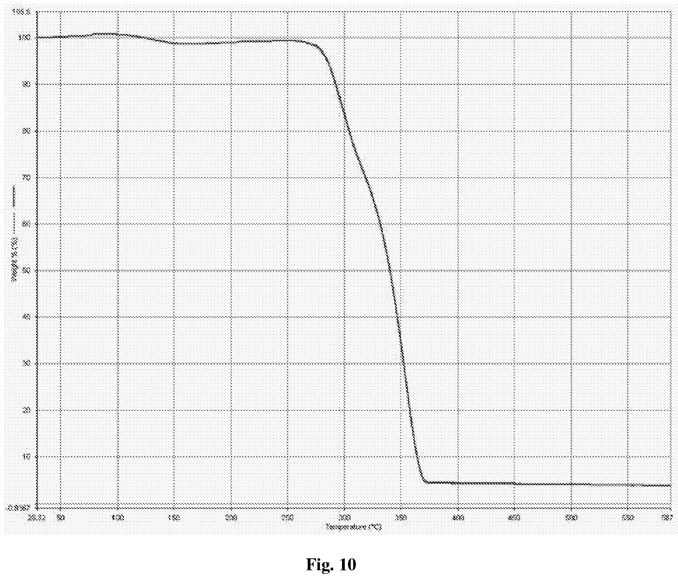

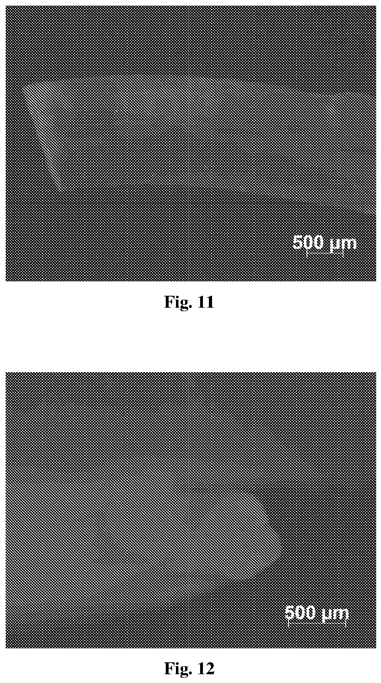

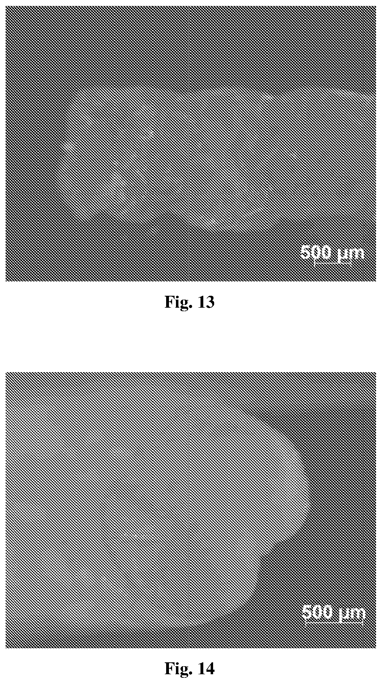

Figures 6-10 depicts thermogravimetric analysis (TGA) plots which aid us in finding out the residual monomer content in the polymer. Lactide, i.e. the monomer, completely sublimes at a temperature of 255°C. The decrease in weight as shown by TGA plots at 255°C gives us information about the residual lactide content in the polymer. Thus, figs. 1-10 provide the characterization data for the synthesized batches. Varying the concentration of the PLLA in the preferred solvent has an effect on the fiber morphology. Figures 11-12 are images of a pellet made from 10 w/v % of PLLA in solvent. The image shows at low concentration the fiber is flat and ribbon like. Upon increasing the concentration to 20 w/v % the pellets obtained are cylindrical and non-porous; figures 13-14 demonstrate this type of pellet.

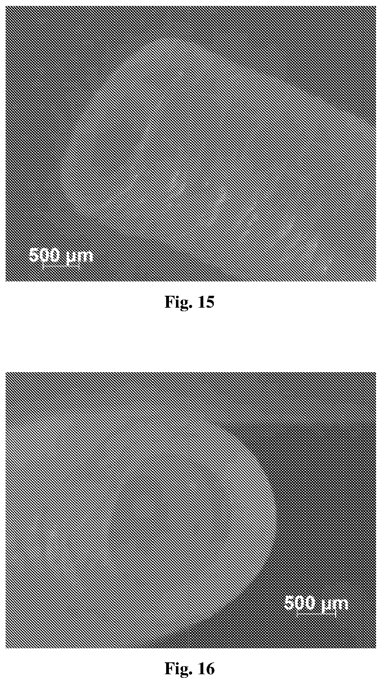

Figures 15-16 are depictions of pellets which are made from a 30 w/v % solution of PLLA in solvent. The pellets obtained from such high concentrations exhibit a hollow, non-porous morphology.

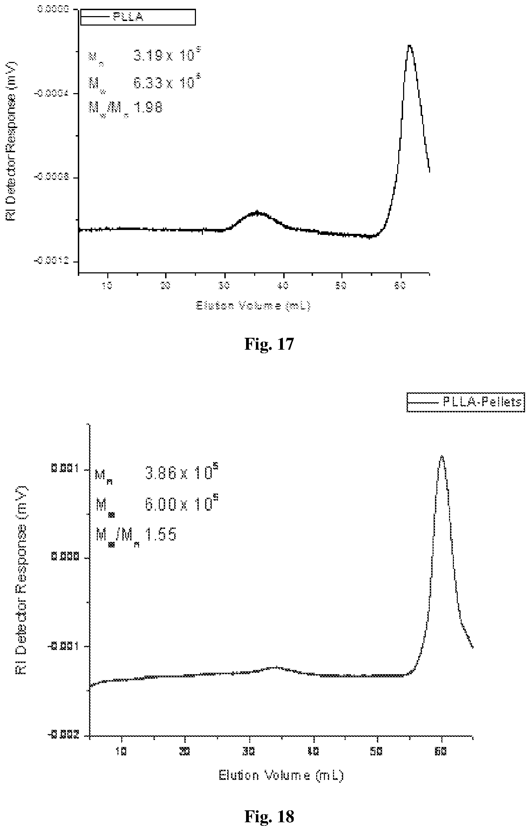

Figure 17 This GPC plot shows a weight average molecular weight of 633,000. PLLA is analyzed as is; this polymer is further dissolved and pelletized.

Figure 18: This GPC shows a weight average molecular weight of 600,000. This GPC is for PLLA pellets and it is clear that the decrease in molecular weights is negligible.

Article titled "Thermal degradation of poly(lactic acid) (PLA) and poly(butylene-adipate-co-terephthalate) (PBAT) and their blends upon melt processing" by Francesca Signori et al. and article titled "Thermal oxidative degradation of poly-lactic acid" by M.C. Gupta et al published in the journal Colloid and Polymer Science*,* reports A significant drop in molecular weight is observed upon exposing PLA at elevated temperatures for varying periods of time. Upon these prior arts inventors overcomes the drawbacks of prior art of reduction in molecular weight.

The novelty and inventive step of the invention lies in a process to synthesize polymer filaments of PLA at temperature ranging from 25-30 deg C, wherein this low temperature prevents degradation of the polymer. The process is devoid of the melt processing step and therefore prevents the degradation of PLA. So a long standing problem in the art is resolved by the process of the invention.

The following examples, which include preferred embodiments, will serve to illustrate the practice of this invention, it being understood that the particulars shown are by way of example and for purpose of illustrative discussion of preferred embodiments of the invention.

### Examples:

### Example 1: Synthesis of poly-l-lactic acid.

The reaction mixture, comprising of l-lactide and stock solution, is added to a glass ampoule inside a glove box, under Argon atmosphere. The said stock solution consists of catalyst, tin-(II)-ethyl hexanoate, and toluene in 1% v/v proportion. The glass ampoule along with its contents is dried, under temperature and vacuum, thoroughly so as to remove to toluene from the reaction mixture. The glass ampoule is sealed under high vacuum and subjected to a temperature of 140°C for 75 minutes so as to carry out ring opening polymerization. Observe here that an initiator less system is used. The initiation of the reaction takes place with the assistance of the residual hydroxyl groups that are present in the reaction mixture. A significant rise in viscosity is observed at the end of the time duration mentioned. Upon completion of ring opening polymerization the temperature is reduced to 110°C. The reduced temperature leads to solid state polymerization, during which the earlier unreacted monomer participates in the reaction and higher conversion ratios are obtained. The reduced temperature is maintained for 12 hours so as to effect higher monomer conversion which ultimately leads to low lactide content.

### Example 2: Preparation of flat filament-like pellets.

The polymer obtained from Example (1) is dissolved in chloroform in the ratio of 10 w/v %. The obtained polymer dope, which is highly viscous, is extruded through an orifice using a fixed volumetric displacement pump (Harvard Instruments PHD 1000). Extrusion is carried out at ambient temperature conditions with extrusion speed set at 0.25 ml/min. The take up of the fibres is on a plane surface. The fibres collected on the surface are dried under vacuum and temperature to remove the solvent from fibres. The resultant fibres present an interesting morphology, wherein said fibres possess a flat filament structure without the presence of any voids, or axial holes. These fibres are then pelletized.

### Example 3: Preparation of non-porous pellets.

The polymer obtained from Example (1) is dissolved in chloroform in the ratio of 20 w/v %. The obtained polymer dope, which is highly viscous, is extruded through an orifice using a fixed volumetric displacement pump (Harvard Instruments PHD 1000). Extrusion is carried out at ambient temperature conditions with extrusion speed set at 0.25 ml/min. The take up of the fibres is on a plane surface. The fibres collected on the surface are dried under vacuum and temperature to remove the solvent from fibres. The resultant fibres present an interesting morphology, wherein said fibres possess a cross-section that appears to be oblong in shape and does not possess a hollow core. These fibres are then pelletized.

### Example 4: Preparation of hollow, non-porous pellets.

The polymer obtained from Example (1) is dissolved in chloroform in the ratio of 30w/v %. The obtained polymer dope, which is highly viscous, is extruded through an orifice using a fixed volumetric displacement pump (Harvard Instruments PHD 1000). Extrusion is carried out at ambient temperature conditions with extrusion speed set at 0.25 ml/min. The take up of the fibres is on a plane surface. The fibres collected on the surface are dried under vacuum and temperature to remove the solvent from fibres. The resultant fibres present an interesting morphology, wherein said fibres possess a hollow central core and non-porous walls. These fibres can then be pelletized.

### ADVANTAGES OF THE INVENTION:

1. Novel process which involves ring opening polymerization at lower temperatures followed by solid state polymerization at further reduced temperatures.
2. High molecular weight achieved in the range of 500,000-900,000.
3. Low lactide content observed.
4. High monomer to polymer conversion ratios.
5. Minimal reduction in molecular weight upon conversion to pellets.
6. Extrusion of polymer to form fibre/filament, using a solvent system, without the use of any non-solvent.
7. Control on filament morphology by varying concentration of polymer solution; without the need of any die.

## Claims

1. A one step process for the synthesis of poly lactic acid (PLA) pellets comprising dissolving poly lactic acid of weight average molecular weight in the range of 600,000-800,000 (6 to 8 lakhs) in a solvent followed by extrusion at the temperature ranging from 25°C to 30°C to obtain fibre morphologies, said fibres are cut to obtain pellets, wherein the weight average molecular weight of PLA in the pellets is retained in the range of 600,000-800,000 (6 to 8 lakhs), and wherein the weight average molecular weight is determined as indicated in the description.

2. The process as claimed in claim 1, wherein said pellets are selected from flat-filaments, oblong non porous or hollow non porous pellets.

3. The process as claimed in claim 1, wherein the lactide content of the pellets is in a range from 0-10%.

4. The process as claimed in claim 1, wherein said solvent for dissolution is selected from dichloromethane and chloroform, preferably said solvent is chloroform.

5. The process as claimed in claim 1, wherein the poly lactic acid is poly-l-lactic acid and the process of preparation of production of high molecular weight poly-l-lactic acid from lactide, comprises the following steps:
a) carrying out ring opening polymerization in the presence of a suitable catalyst;
b) subjecting compound of step (a) to solid state polymerization to obtain high molecular weight poly-l-lactic acid with low lactide content.

6. The process as claimed in claim 5, wherein said ring opening polymerization is carried out at the temperature ranging from 140-220°C for a time period ranging from 0 to 60 hours; preferably wherein said ring opening polymerization is carried out at 140°C for 75 minutes.

7. The process as claimed in claim 5, wherein said solid state polymerization is carried out at temperature ranging from 110-140°C for a time period ranging from 1 to 384 hours to get high molecular weight poly-l-lactic acid; preferably said solid state polymerization is carried out at 110°C for 12 hours.

8. The process as claimed in claim 5, wherein said weight average molecular weight of poly-l-lactic acid obtained by said process is 600,000-800,000 (6 to 8 lakhs), and lactide content observed in the said polymer of claim 1 is less than 10%, preferably said lactide content is less than 2%, and wherein the weight average molecular weight is determined as indicated in the description.

9. The process as claimed in claim 5, wherein said catalyst is selected from tin (II) chloride, tin (II) ethyl hexanoate, zinc (II) alkoxides; said catalyst is tin (II) ethyl hexanoate.

10. The process as claimed in claim 5, wherein monomer to catalyst ratio is vary from 170 to 6300; monomer to said catalyst ratio is 960:1.

## Patentansprüche

1. Verfahren in einem Schritt zur Synthetisierung von Polymilchsäure (PLA)-Pellets, umfassend das Auflösen von Polymilchsäure mit einem gewichtsdurchschnittlichen Molekulargewicht im Bereich von 600.000-800.000 (6 bis 8 Hunderttausend) in einem Lösungsmittel gefolgt von Extrusion bei einer Temperatur im Bereich von 25° C bis 30° C zum Erreichen von Fasermorphologien, wobei die Fasern zum Erreichen von Pellets geschnitten werden, wobei das gewichtsdurchschnittliche Molekulargewicht von PLA in den Pellets im Bereich von 600.000-800.000 (6 bis 8 Hunderttausend) festgehalten wird, und wobei das gewichtsdurchschnittliche Molekulargewicht bestimmt wird wie in der Beschreibung angegeben.

2. Verfahren nach Anspruch 1, wobei die Pellets aus Flachfilamenten, länglichen nicht-porösen oder hohlen nicht-porösen Pellets ausgewählt werden.

3. Verfahren nach Anspruch 1, wobei der Lactidgehalt der Pellets in einem Bereich von 0-10% liegt.

4. Verfahren nach Anspruch 1, wobei das Lösungsmittel zur Auflösung unter Dichlormethan und Chloroform ausgewählt wird, vorzugsweise ist das Lösungsmittel Chloroform.

5. Verfahren nach Anspruch 1, wobei die Polymilchsäure Poly-L-Milchsäure ist, und das Verfahren zur Vorbereitung der Herstellung von Poly-L-Milchsäure von hohem Molekulargewicht aus Lactid die folgenden Schritte umfasst:
a) Ausführen von Ringöffnungspolymerisierung in Gegenwart von einem geeigneten Katalysator;
b) Unterziehen der Verbindung von Schritt (a) einer Festkörperpolymerisierung, um Poly-L-Milchsäure von hohem Molekulargewicht mit einem geringen Lactidgehalt zu erreichen.

6. Verfahren nach Anspruch 5, wobei die Ringöffnungspolymerisierung bei einer Temperatur im Bereich von 140-220° C für einen Zeitraum im Bereich von 0 bis 60 Stunden ausgeführt wird; vorzugsweise wobei die Ringöffnungspolymerisierung bei 140° C für 75 Minuten ausgeführt wird.

7. Verfahren nach Anspruch 5, wobei die Festkörperpolymerisierung bei einer Temperatur im Bereich von 110-140° C für einen Zeitraum im Bereich von 1 bis 384 Stunden ausgeführt wird, um Poly-L-Milchsäure von hohem Molekulargewicht zu erreichen; vorzugsweise wird die Festkörperpolymerisierung bei 110° C für 12 Stunden ausgeführt.

8. Verfahren nach Anspruch 5, wobei das gewichtsdurchschnittliche Molekulargewicht der durch das Verfahren erhaltenen Poly-L-Milchsäure 600.000-800.000 (6 bis 8 Hunderttausend) ist, und der Lactidgehalt, der im Polymer nach Anspruch 1 beobachtet wurde, kleiner als 10% ist, vorzugsweise ist der Lactidgehalt kleiner als 2%, und wobei das gewichtsdurchschnittliche Molekulargewicht festgelegt wird wie in der Beschreibung angegeben.

9. Verfahren nach Anspruch 5, wobei der Katalysator aus Zinn (II)-Chlorid, Zinn (II)-Ethylhexanoat, Zink (II)-Alkoxiden ausgewählt wird; wobei der Katalysator Zinn (II)-Ethylhexanoat ist.

10. Verfahren nach Anspruch 5, wobei das Monomer zu Katalysator-Verhältnis von 170 bis 6300 variiert; das Monomer zu Katalysator-Verhältnis 960:1 ist.

## Revendications

1. Procédé en une étape pour la synthèse de granulés d'acide polylactique (PLA) comprenant la dissolution d'acide polylactique de poids moléculaire moyen en poids dans la plage de 600.000-800.000 (6 à 8 lakhs) dans un solvant suivie par une extrusion à la température allant de 25°C à 30°C pour obtenir des morphologies de fibres, lesdites fibres étant coupées pour obtenir des granulés, le poids moléculaire moyen en poids du PLA dans les granulés étant maintenu dans la gamme de 600.000-800.000 (6 à 8 lakhs), et le poids moléculaire moyen en poids étant déterminé comme indiqué dans la description.

2. Procédé selon la revendication 1, dans lequel lesdits granulés sont choisis parmi des filaments plats, des granulés non poreux oblongues ou non poreux.

3. Procédé selon la revendication 1, dans lequel la teneur en lactide des granulés est dans une plage de 0 à 10%.

4. Procédé selon la revendication 1, dans lequel ledit solvant de dissolution est choisi parmi le dichlorométhane et le chloroforme, de préférence ledit solvant est le chloroforme.

5. Procédé selon la revendication 1, dans lequel l'acide polylactique est l'acide poly-l-lactique, et le procédé de préparation de la production d'acide poly-l-lactique de poids moléculaire élevé à partir de lactide comprend les étapes suivantes :
a) la réalisation d'une polymérisation par ouverture de cycle en présence d'un catalyseur approprié ;
b) la soumission du composé de l'étape (a) à une polymérisation à l'état solide pour obtenir de l'acide poly-l-lactique de poids moléculaire élevé ayant une faible teneur en lactide ;

6. Procédé selon la revendication 5, dans lequel ladite polymérisation par ouverture de cycle est effectuée à la température allant de 140 à 220°C pendant une période de temps allant de 0 à 60 heures ; de préférence ladite polymérisation par ouverture de cycle est effectuée à 140°C pendant 75 minutes.

7. Procédé selon la revendication 5, dans lequel ladite polymérisation à l'état solide est effectuée à une température allant de 110 à 140°C pendant une période de temps allant de 1 à 384 heures pour obtenir de l'acide poly-l-lactique de poids moléculaire élevé ; de préférence ladite polymérisation à l'état solide est effectuée à 110°C pendant 12 heures.

8. Procédé selon la revendication 5, dans lequel ledit poids moléculaire moyen en poids d'acide poly-l-lactique obtenu par ledit procédé est de 600.000-800.000 (6 à 8 lakhs), et la teneur en lactide observée dans ledit polymère de la revendication 1 est inférieure à 10%, de préférence ladite teneur en lactide est inférieure à 2%, et le poids moléculaire moyen en poids étant déterminé comme indiqué dans la description.

9. Procédé selon la revendication 5, dans lequel ledit catalyseur est choisi parmi le chlorure d'étain (II), l'éthylhexanoate d'étain (II), les alcoolates de zinc (II) ; ledit catalyseur est l'éthylhexanoate d'étain (II).

10. Procédé selon la revendication 5, dans lequel rapport monomère / catalyseur varie de 170 à 6300 ; le rapport du monomère audit catalyseur est de 960:1.
